# EUROPEAN PATENT APPLICATION

(11) **EP 3 339 393 A1**
(43) Date of publication of application: **27.06.2018**
(21) Application number: 16382630.8
(22) Date of filing: 20.12.2016
(51) Int. Cl.: C09K 5/12, F24J 2/00, F28D 20/00

(54) **A PROCESS FOR THE PREPARATION OF A MOLTEN SALT-BASED NANOFLUID**

(71) Applicant: Fundación Tecnalia Research & Innovation, 48160 Derio - Bizkaia (ES); Universidad Del Pais Vasco Euskal Herriko Unibertsitatea, 48013 Bilbao (ES)
(72) Inventor: Muñoz Sánchez, Maria Belén, 48013 Bilbao (ES); Nieto Maestre, Francisco Javier, 20009 San Sebastián (ES); Iparraguirre Torres, Iñigo, 20009 San Sebastián (ES); García Romero, Ane Miren, 48013 Bilbao (ES)
(74) Representative: ZBM Patents - Zea, Barlocci & Markvardsen

(57) **Abstract**

The present invention relates to a process for the preparation of a molten salt-based nanofluid comprising: a) providing an aqueous dispersion of one or more nanoparticles, wherein the dispersion has a pH at which the nanoparticle is stable; b) providing an aqueous solution of an inorganic salt, wherein the solution has a pH at which the nanoparticle is stable; c) adding the dispersion obtained in step a) to the solution obtained in step b); d) drying the resulting mixture obtained in step c) at a temperature below the boiling temperature of the water and at a surface/volume ratio comprised from 130 m⁻¹ to 1500 m⁻¹; and e) melting the mixture obtained in step d), wherein the nanoparticles are selected from the group consisting of metal oxide nanoparticles and semiconductor nanoparticles. It also relates to a molten salt-based nanofluid obtained by this process, as well as its use as a heat transfer fluid or thermal storage material.

## Description

The present invention relates to nanofluids for heat transfer and thermal storage, particularly to a process for the preparation of molten salt-based nanofluids, and the molten salt-based nanofluid obtainable by this process.

### Background Art

In recent years, the renewable sources of energy, such as solar, wind, waves or tides are increasingly being used in substitution of fossil fuels. The quantity of CO₂ in the atmosphere produced by human activities is growing year by year and consequently, the average temperature of the planet is increasing due to the greenhouse effect.

Solar energy is a good candidate in countries with high irradiation, either using PhotoVoltaic (PV) technologies where solar radiation is directly converted into electric energy or concentrated solar power technologies (CSP) where the energy is concentrated by mirrors to produce heat which is converted then into electricity. Nowadays, the Levelized Cost of Energy (LCOE) of PV technologies is much lower (7 c€/kWh) than in CSP (20 c€/kWh) at the same solar irradiation (2000 kWh/m²year). The most important drawback of the PV technology is that electricity can only be produced during sunny days. Meanwhile, the solar energy captured by CSP technology can either be used to produce electricity or be stored as sensible heat during the day to produce electricity later. This is possible due to the use of Thermal Energy Storage (TES) systems.

The most common TES system is the named "two tank system" formed by a hot tank and a cold tank. These tanks are filled with a molten salt. The principle of work of the "two tank system" is that during the charging step (when there is an income of energy), the molten salt is driven from the cold tank (at about 300 °C) to the hot tank (at about 400 °C) through a heat exchanger (HX). Particularly, the heat is transferred from a Heat Transfer Fluid (HTF) to the TES material (molten salt) in HX. Besides, during the discharging step, the contrary process is performed, and again the heat is transferred in this case to the HTF through HX. The most common used HTFs are thermal oils (such as a mixture of biphenyl and biphenyl oxide commercially available as Therminol VP) and the TES material is a mixture of sodium and potassium nitrate (60:40 %wt.) with a melting point of 220 °C and a specific heat of 1.5 kJ/kg⁻¹·K⁻¹ named "solar salt".

In order to achieve enough thermal energy to provide energy during the night (8 hours), huge tanks (of about 14,000 tonnes) must be employed with the consequent high investment costs only due to TES materials. The system could be also improved by using a TES material with enhanced thermal energy transfer properties, mainly higher specific heat. To this aim, nano-enhanced molten salts based on Solar Salt and ceramic nanoparticles (such as for example silica or alumina) are attracting great interest in recent years. The use of these nanofluids allows achieving an enhanced specific heat in the order of 25%.

Several methods for the preparation of molten salt-based nanofluids have been disclosed. Particularly, the most commonly used method involves firstly, the dissolution of an inorganic salt in water at a low concentration (i.e. at a weight ratio salt/water of 1:100 %wt.), the addition of the proper quantity of solid nanoparticles followed by their dispersion by means of ultrasounds; and finally, drying the dispersion thus obtained in a hot plate.

This procedure have two critical stages which involves a high energy consumption. By one side, the ultrasonic power required to dispersed the nanoparticles on the aqueous salt solution. On the other side, the thermal energy to remove this huge quantity of water during the drying of the nanofluid. These factors difficult the implementation of this synthesis procedure at industrial scale. Furthermore, another disadvantge is the tendency to create nanoparticle agglomerates during the preparation process of the molten salt-based nanofluids. These nanoparticle agglomerates can hinder the shelf life of the nanofluids and also their thermal storage capability.

Therefore, from what is known in the art it is derived that there is still the need of providing a more productive process for the preparation of molten salt-based nanofluids at industrial scale having improved thermal properties.

### Summary of Invention

Inventors have found a more productive process for the preparation of stable molten salt-based nanofluids. Particularly, the process is based on the addition of a stable water-suspension of nanoparticles to a salt solution followed by drying the mixture thus obtained under the specific conditions of temperature and drying surface/volume ratio of the invention. Thus, this process allows preparing molten salt-based nanofluids with high thermal storage properties wherein the nanoparticles have a particle size comprised from 20 nm to 220 nm and a particle size distribution wherein D90 is comprised from 70 nm to 120 nm.

Furthermore, the process for preparing molten salt-based nanofluids of the invention is also advantegeous because it is suitable for being used at industrial scale. It is due to the fact that the process avoids the use of ultrasound equipments and also of big amount of solvent (water) without compromising the nanometric sizes of the particles contained inside. Thus, the process of the invention avoids the formation of nanoparticle agglomerates during the preparation process.

Thus, an aspect of the invention relates to a process for the preparation of a molten salt-based nanofluid, which comprises: a) providing an aqueous dispersion of one or more nanoparticles, wherein the dispersion has a pH at which the nanoparticle is stable; b) providing an aqueous solution of an inorganic salt, wherein the solution has a pH at which the nanoparticle is stable; c) adding the dispersion obtained in step a) to the solution obtained in step b); d) drying the resulting mixture obtained in step c) at a temperature below the boiling temperature of the water measured at atmospheric pressure of the mixture obtained in step c) and at a surface/volume ratio comprised from 130 m⁻¹ to 1500 m⁻¹; and e) melting the mixture obtained in step d), wherein the nanoparticles are selected from the group consisting of metal oxide nanoparticles and semiconductor nanoparticles.

The second aspect of the invention relates to a molten salt-based nanofluid comprising nanoparticles of a particle size comprised from 20 nm to 220 nm and a particle size distribution wherein D90 is comprised from 70 nm to 120 nm.

The third aspect of the invention relates to the use of a molten salt-based nanofluid as defined in the second aspect of the invention as a HTF or TES material.

Finally, the fourth aspect of the invention relates to a system for heat transfer or thermal storage which comprises the molten salt-based nanofluid as defined in the second aspect of the invention.

### Brief Description of Drawings

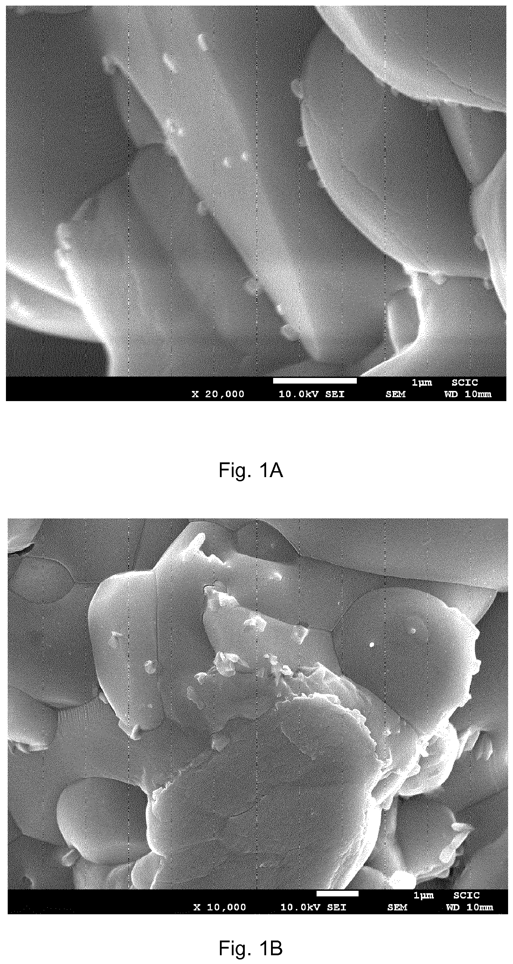

Figure 1 shows SEM images from the molten salt-based nanofluid of Example Nanofluid 3 of the present invention (Fig. 1A) and from the molten salt-based nanofluid of Example Nanofluid 2 of the present invention (Fig. 1 B).

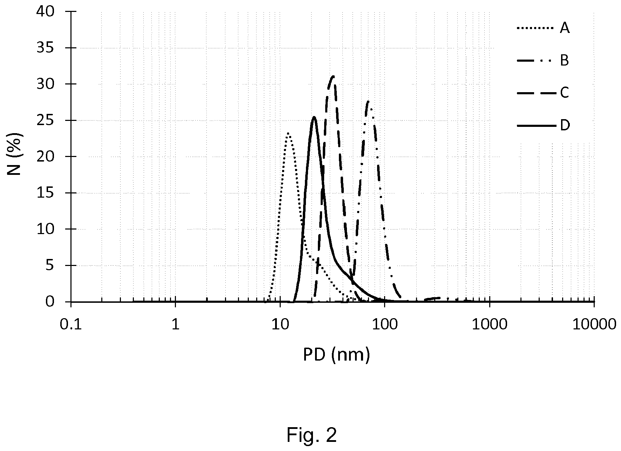

Figure 2 shows the nanoparticle size distribution in each step of the preparation of the molten salt-based nanofluid of Example Nanofluid 2 of the present invention. The curves obtaining after each synthesis step are depicted: Pointed curve (A) obtained after step (a), dashed-pointed curve (B) obtained after mixing step (c), dashed curve (C) obtained after drying step (d), and solid curve (D) obtained after melting step (d). The graphic indicates the number (N) of nanoparticles expressed in % versus Particle Diameter (PD) expressed in nm.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

For the purposes of the invention, any ranges given include both the lower and the upper end-points of the range. Ranges given, such as temperatures, times, and the like, should be considered approximate, unless specifically stated.

The term "nanofluid" refers to a two-phase mixture where the continuous phase is a liquid (called base fluid) and the dispersed phase is composed of nanoparticles.

The term "nanoparticle" refers to a discrete portion of material that has mass and dimension being elements of a suspension having a diameter comprised from 1 nm to 250 nm.

The terms "particle size" and "average particle size" have the same meaning and are used interchangeable. They refer to the number average particle size based on the largest linear dimension of the particle (sometimes referred to as "diameter"). Particle size, including average, maximum, and minimum particle sizes, may be determined by an appropriate method of sizing particles such as, for example, Static or Dynamic Light Scattering (SLS or DLS) using a laser light source.

The nanoparticles may be monodisperse, where all particles are of the same size with little variation, or polydisperse, where the particles have a range of sizes and are averaged. The terms "polydispersion of the particle size of the nanoparticle", "particle size distribution", "polydispersity of the particle size" and "PSD" have the same meaning and are used interchangeable. They refer to a value obtained from the square of the standard deviation divided by the mean diameter. They refer to the percentage of the nanoparticles within a certain size range.

The term "D90" refers to the value of particle size distribution where at least 90% of the nanoparticles have a size less or equal to the given value. When characteristic values of "D90" are given it is said that these are "approximate" values due to the measurement error. It should be understood that the values are the ones shown in the description and the claims ± 5% measured by DLS.

The particle size of the nanoparticles of the invention and their polydispersion can be measured by any method disclosed in the state of the art for measuring the particle size of nanoparticles. In particular, the method used in the present invention for measuring the particle size and the polydispersion in solution is DLS reporting the number average diameter value and the nanoparticle size distribution.

The terms "surface to volume ratio", "surface/volume ratio" and "S/V ratio" have the same meaning and are used interchangeable. They refer to the surface of the container where the mixture of nanoparticles and salt solutions obtained in step c) is dried and the volume of the mentioned mixture.

The term "alkali metal" refers to the elements of the first group (Group IA) of the periodic system, that is lithium, sodium, potassium, rubidium and cesium. The term "alkaline-earth metal" refers to the elements of the second group (Group IIA) of the periodic system, that is magnesium, calcium, strontium and barium.

The terms "percentage (%) by weight" and "percentage (%) wt" have the same meaning and are used interchangeable. They refer to the percentage of each component in relation to the total weight.

As it mentioned above, the first aspect of the invention relates to a process for the preparation of stable molten-salt based nanofluid.

In an embodiment, optionally in combination with one or more features of the various embodiments described above or below, the nanoparticles of the molten salt-based nanofluid have a particle size comprised from 20 nm to 220 nm; preferably having a particle size comprised from 20 nm to 200 nm. In a particular embodiment, the nanoparticles of the molten salt-based nanofluid have a particle size comprised from 70 nm to 100 nm.

In an embodiment, optionally in combination with one or more features of the various embodiments described above or below, the nanoparticles of the molten salt-based nanofluid have a particle size distribution wherein D90 is comprised from 70 nm to 120nm; preferably having a particle size distribution wherein D90 is comprised from 72 nm to 100 nm; preferably comprised from 74 nm to 98 nm. In a particular embodiment, the nanoparticles of the molten salt-based nanofluid have a particle size distribution of 74.5 nm. In another embodiment, the nanoparticles of the molten salt-based nanofluid have a particle size distribution of 88.5 nm. In another embodiment, the nanoparticles of the molten salt-based nanofluid have a particle size distribution of 97.9 nm.

In an embodiment, optionally in combination with one or more features of the various embodiments described above or below, the nanoparticles of the molten salt-based nanofluid have a particle size distribution comprised from 20 nm to 220 nm and a size distribution wherein D90 is comprised from 70 nm to 120 nm. In an embodiment, optionally in combination with one or more features of the various embodiments described above or below, the nanoparticles of the molten salt-based nanofluid have a particle size distribution comprised from 20 nm to 200 nm and a size distribution wherein D90 is comprised from 72 nm to 100 nm. In an embodiment, optionally in combination with one or more features of the various embodiments described above or below, the nanoparticles of the molten salt-based nanofluid have a particle size comprised from 70 nm to 100 nm and a particle size distribution wherein D90 is comprised from 74 nm to 98 nm.

As it is disclosed above, step a) of the process of the invention comprises providing an aqueous dispersion of one or more nanoparticles, wherein the aqueous dispersion has a pH at which the nanoparticle is stable.

In an embodiment, optionally in combination with one or more features of the various embodiments described above or below, the nanoparticles are metal oxide nanoparticles selected from the group consisting of Fe₃O₄ nanoparticles, Al₂O₃ nanoparticles, SiO₂ nanoparticles, ZrO₂ nanoparticles, CuO nanoparticles, TiO₂ nanoparticles; preferably the nanoparticles are Al₂O₃ nanoparticles, SiO₂ nanoparticles, ZrO₂ nanoparticles and TiO₂ nanoparticles. In a particular embodiment, optionally in combination with one or more features of the various embodiments described above or below, the nanoparticles are Al₂O₃ nanoparticles or SiO₂ nanoparticles.

In an embodiment, optionally in combination with one or more features of the various embodiments described above or below, the nanoparticles are semiconductor nanoparticles. The term "semiconductor nanoparticle" refers to nanoparticles composed of an inorganic semiconductive material, an alloy or a mixture of inorganic semiconductive materials. In an embodiment, the nanoparticles are semiconductor nanoparticles selected from the group consisting of V₂O₅ nanoparticles, WO₃ nanoparticles, Fe₂O₃ nanoparticles, SnO₂ nanoparticles, CdSe nanoparticles, GaAs nanoparticles, GaP nanoparticles, CdS nanoparticles and ZnS nanoparticles.

In en embodiment, the dispersion obtained in step a) is a concentrated nanoparticle dispersion having a concentration of nanoparticles comprised from 5% to 50% by weight of the weight of the dispersion; preferably comprised from 10% to 30% by weight.

The dispersion obtained in step a) is stable because has a pH at which the nanoparticles are stable because the nanoparticles do not agglomerate. The value of the pH at which each nanoparticle is stable is well known in the state of the art through the Z potential concept (cf. Junior, J.A.A. et al. "The Behavior of Zeta Potential of Silica Suspensions". New Journal of Glass and Ceramics 4, 2014, pp. 29-37; and Zetasizer Nano User Manual, Malvern Instruments, MAN0485 Issue 1.1 April 2013, Chapter 13, pp.13-1/13-12).The Z potential can be measured by any method disclosed in the state of the art. In particular, the method used in the present invention for measuring the Z potential is DLS.

In an embodiment, optionally in combination with one or more features of the various embodiments described above or below, the nanoparticles are metal oxide nanoparticles selected from the group consisting of Fe₃O₄ nanoparticles, Al₂O₃ nanoparticles, SiO₂ nanoparticles, ZrO₂ nanoparticles, CuO nanoparticles and TiO₂ nanoparticles, and the suitable pH for each nanoparticle is shown in the Table below:

| **Nanoparticle** | **pH at which the nanoparticle is stable** |
|---|---|
| Fe₃O₄ nanoparticles | pH equal to or lower than 4 and equal to or higher than 9 |
| Al₂O₃ nanoparticles | pH equal to or lower than 4 and equal to or higher than 10 |
| SiO₂ nanoparticles | pH equal to or higher than 8 |
| ZrO₂ nanoparticles | pH equal to or lower than 5 and equal to or higher than 9 |
| CuO nanoparticles | pH equal to or less than 7 |
| TiO₂ nanoparticles | pH equal to or lower than 5 and equal to or higher than 9 |

In a particular embodiment, optionally in combination with one or more features of the various embodiments described above or below, the nanoparticle is Al₂O₃ nanoparticle and the pH of the dispersion of step a) and the solution of step b) is equal to or lower than 4 or higher than 10. In a particular embodiment, optionally in combination with one or more features of the various embodiments described above or below, the nanoparticle is SiO₂ nanoparticle and the pH of the dispersion of step a) and the solution of step b) is equal to or higher than 8.

In an embodiment, optionally in combination with one or more features of the various embodiments described above or below, the process of the invention comprises: a) providing an aqueous dispersion of one or more nanoparticles, wherein the dispersion has a pH at which the nanoparticle is stable and is obtainable by wet chemical proccesses described in the state of the art for each one of the nanoparticle described in the present invention

As it is disclosed above, step b) of the process of the invention comprises providing an aqueous solution of an inorganic salt, wherein the solution has a pH at which the nanoparticle is stable, which means that the nanoparticles do not agglomerate.

In an embodiment, optionally in combination with one or more features of the various embodiments described above or below, the inorganic salt is selected from the group consisting of alkali or alkaline-earth metal carbonate, alkali or alkaline-earth metal sulfate, alkali or alkaline-earth metal phosphate, alkali or alkaline-earth metal chloride, and alkali or alkaline-earth metal nitrate, and mixture thereof; preferably the salt is a mixture of alkali or alkaline-earth metal nitrates. In an embodiment, the salt is a mixture of sodium nitrate and potassium nitrate; preferably the salt is a mixture of sodium nitrate and potassium nitrate (60:40 %wt.); in a prefered embodiment the salt is solar salt (Vignarooban, K. et al. "Heat transfer fluids for concentrating solar power systems-a review". Applied Energy, 2015, vol. 146, pp. 383-396; and Bauer, T. et al. "Material aspects of solar salt for sensible heat storage". 2013. Applied energy, vol.111, pp.1114-1119).

In an embodiment, optionally in combination with one or more features of the various embodiments described above or below, the aqueous solution of the inorganic salt obtained in step b) is selected from the group consisting of a "nearly saturated solution" or a "saturated solution".

In an embodiment, the aqueous solution of the inorganic salt obtained in step b) is "nearly saturated solution". The term "nearly saturated solution" refers to an aqueous solution of an inorganic salt that is near saturation but has not reached its saturation point. In an embodiment, optionally in combination with one or more features of the various embodiments described above or below, the aqueous solution of the inorganic salt obtained in step b) is "nearly saturated solution" comprised from 5% to 10% below the saturation point.

In an embodiment, the aqueous solution of the inorganic salt obtained in step b) is a "saturated solution". The term "saturated solution" refers to a solution that is so concentrated that no more solute that is added will dissolve in it, that means a solution exactly at its saturation point. The saturation point of a solution varies depending on the nature of the solute and the salt. The saturation point of the solution of step b) can readily be determined by those skilled in the art according to the type of inorganic salt being used (Lide, D. R. "Aqueous solubility of inorganic compounds at various temperatures". CRC Handbook of Chemistry and Physics. 84th Edition. 2004. Section 8: Analytical Chemistry. pp. 8-110 / 8-118).

All the embodiments disclosed above for step a) in relation to pH and nanoparticles also applies for step b) of the process of the first aspect of the invention.

In an embodiment, optionally in combination with one or more features of the various embodiments described above or below, the process of the invention comprises: b) providing an aqueous solution of an inorganic salt, wherein the solution has a pH at which the nanoparticle is stable and is obtainable by the process which comprises: b') weighing the amount of inorganic salt which are composing the molten salt-based nanofluid; b") adding the appropriate amount of water having the pH at which the nanoparticle is stable until having a saturated solution; and b"') mixing until dissolve completely the inorganic salt.

In an embodiment, optionally in combination with one or more features of the various embodiments described above or below, the process comprises preparing the aqueous solution of step b) carrying out steps b')-b"') as defined above.

In an embodiment, optionally in combination with one or more features of the various embodiments described above or below, the process is that wherein: the nanoparticles are metal oxide nanoparticles selected from the group consisting of Fe₃O₄ nanoparticles, Al₂O₃ nanoparticles, SiO₂ nanoparticles, ZrO₂ nanoparticles, CuO nanoparticles, TiO₂ nanoparticles; or alternatively the nanoparticles are semiconductor nanoparticles selected from the group consisting of V₂O₅ nanoparticles, WO₃ nanoparticles, Fe₂O₃ nanoparticles, SnO₂ nanoparticles, CdSe nanoparticles, GaAs nanoparticles, GaP nanoparticles, CdS nanoparticles and ZnS nanoparticles; the inorganic salt is selected from an alkali or alkaline-earth metal nitrate and mixture thereof; and preferably the aqueous solution of the inorganic salt obtained in step b) is selected from the group consisting of a "nearly saturated solution" or a "saturated solution".

In a particular embodiment, optionally in combination with one or more features of the various embodiments described above or below, the process is that wherein: the nanoparticles are metal oxide nanoparticles selected from the group consisting of Al₂O₃ nanoparticles and SiO₂ nanoparticles; the inorganic salt is a mixture of sodium nitrate and potassium nitrate; preferably solar salt; and preferably the aqueous solution of the inorganic salt obtained in step b) is selected from the group consisting of a "nearly saturated solution" or a "saturated solution".

In an embodiment, optionally in combination with one or more features of the various embodiments described above or below, the process of the invention comprises: a) providing an aqueous dispersion of one or more nanoparticles, wherein the aqueous dispersion has a pH at which the nanoparticle is stable; b) providing an aqueous solution of an inorganic salt, wherein the aqueous solution has a pH at which the nanoparticle is stable and is obtainable by the process which comprises: b') weighing the amount of inorganic salt which are composing the molten salt-based nanofluid; b") adding the appropriate amount of water having the pH at which the nanoparticle is stable until having a saturated solution; and b"') mixing until dissolve completely the inorganic salt.

In an embodiment, optionally in combination with one or more features of the various embodiments described above or below, the process comprises firstly, providing the aqueous suspension of step a) and secondly, preparing the solution of step b) carrying out steps b')-b"') as defined above.

As it is disclosed above, step c) comprises adding the dispersion obtained in step a) to the solution obtained in step b). In an embodiment, optionally in combination with one or more features of the various embodiments described above or below, step c) is carried out at a mixing speed comprised from 60 rpm to 800 rpm; preferably comprised from 100 rpm to 600 rpm.

In an embodiment, optionally in combination with one or more features of the various embodiments described above or below, step c) is carried out at a temperature comprised from 25 °C to 70 °C; preferably comprised from 25 °C to 50 °C.

In an embodiment, optionally in combination with one or more features of the various embodiments described above or below, step c) is carried out at a mixing speed comprised from 60 rpm to 800 rpm and at a temperature comprised from 25 °C to 70 °C; preferably step c) is carried out at a mixing speed comprised from 100 rpm to 600 rpm and at a temperature comprised from 25 °C to 50 °C;

In an embodiment, optionally in combination with one or more features of the various embodiments described above or below, step c) is carried out by dropply adding the dispersion obtained in step a) to the solution obtained in step b).

In an embodiment, optionally in combination with one or more features of the various embodiments described above or below, the process comprises firstly, providing the aqueous suspension of step a) and secondly, preparing the aqueous solution of step b) carrying out steps b')-b"'); and subsequently carrying out step c).

As it is disclosed above, step d) comprises drying the resulting mixture obtained in step c) at a temperature below the boiling temperature of the water at atmospheric pressure of the mixture obtained in step c) and at a surface/volume ratio comprised from 130 m⁻¹ to 1500 m⁻¹.

The term "boiling temperature" refers to the temperature at which the vapor pressure of the aqueous solution equals the pressure surrounding it and then, the aqueous solution changes into a vapor at atmospheric pressure of the mixture obtained in step c). It is well known in the state of the art that the boilling point of aqueous solutions containing dissolved salts increases proportionally to the concentration of the inorganic (cf. P. W. Atkins. Physical Chemistry, 4th Ed., Oxford University Press, Oxford, 1994, pp. 222-225). In an embodiment, optionally in combination with one or more features of the various embodiments described above or below, step d) is performed at a temperature comprised from 5 °C to 10 °C below the boiling temperature of the water. In an embodiment, optionally in combination with one or more features of the various embodiments described above or below, step d) is performed at a temperature below 100 °C, preferably at a temperature comprised from 90 °C to 95 °C.

In an embodiment, optionally in combination with one or more features of the various embodiments described above or below, step d) is carried out at a surface/volume ratio comprised from 208 m⁻¹ to 1232 m⁻¹.

In an embodiment, optionally in combination with one or more features of the various embodiments described above or below, step d) is performed below 100 °C; preferably comprised from 90 °C to 95 °C and at a surface/volume ratio comprised from 130 m⁻¹ to 1500 m⁻¹; preferably comprised from 208 m⁻¹ to 1232 m⁻¹.

As it is disclosed above, step e) comprises melting the mixture obtained in step d). In an embodiment, optionally in combination with one or more features of the various embodiments described above or below, step e) is carried out at a temperature comprised from 50 °C to 100 °C above the melting temperature of the inorganic salt and for an appropriate period of time. The term "melting temperature" refers to the temperature at which the salt changes from solid to liquid state. The value of the melting temperature at which each inorganic salt melts is well known in the state of the art (Hammond, C. R. "Physical constants of inorganic compounds". Handbook of Chemistry and Physics, 84th ed., CRC Press, 2004, pp. 39-166).

The second aspect of the invention relates to a molten salt-based nanofluid comprising nanoparticles with a particle size comprised from 20 nm to 220 nm and a particle size distribution wherein D90 is comprised from 70 nm to 120 nm. In an embodiment, optionally in combination with one or more features of the various embodiments described above or below, the molten salt-based nanofluid of the second aspect of the invention may be defined by its preparation process as defined above and therefore, molten salt-based nanofluid comprising nanoparticles with a particle size comprised from 20 nm to 220 nm and a particle size distribution wherein D90 is comprised from 70 nm to 120 nm obtainable by the process above is considered part of the invention. Thus, the invention also relates to a molten salt-based nanofluid comprising nanoparticles with a particle size comprised from 20 nm to 220 nm and a particle size distribution wherein D90 is comprised from 70 nm to 120 nm obtainable by the process as defined in the first aspect of the invention that is a process which comprises: a) providing an aqueous dispersion of one or more nanoparticles, wherein the dispersion has a pH at which the nanoparticle is stable; b) providing an aqueous solution of an inorganic salt, wherein the solution has a pH at which the nanoparticle is stable; c) adding the dispersion obtained in step a) to the solution obtained in step b); d) drying the resulting mixture obtained in step c) at a temperature below the boiling temperature of the water measured at atmospheric pressure of the mixture obtained in step c) and at a surface/volume ratio comprised from 130 m⁻¹ to 1170 m⁻¹; and e) melting the mixture obtained in step d), wherein the nanoparticles are selected from the group consisting of metal oxide nanoparticles and semiconductor nanoparticles.

All the embodiments disclosed above for the process of the first aspect of the invention also applies for the molten salt-based nanofluid of the second aspect of the invention.

The third aspect of the invention relates to the use of the molten salt-based nanofluid as defined in the second aspect of the invention as a HTF or thermal storage material. In an embodiment, the molten salt-based nanofluid is used as a HTF in CSP plant or alternatively in a nuclear plant. In an embodiment, the molten salt-based nanofluid is used as a thermal storage material in a CSP plant or to recover and reuse waste heat on industry.

The fourth aspect of the invention relates to a system for heat transfer or thermal storage, which comprises the molten salt-based nanofluid as defined in the second aspect of the invention. In an embodiment, the system is a HX for being use in CSP plants. In an embodiment, the system is a refrigeration system of nuclear reactors for being use in nuclear plants.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### Examples

### General considerations

The nanoparticle size and their distribution have been measured by means of the DLS technique (ZetaSizer nano ZS, Malvern Instruments, Ltd. Malvern, UK). The Zetasizer system determines the size by first measuring the Brownian motion of the particles in a sample using DLS and then interpreting a size from this using established theories. The Brownian motion is the random movement of particles in a liquid due to the bombardment by the molecules that surround them. An Standard Operating Procedure (SOP) is defined having into account some features both of the nanoparticles (the refractive index and the absorption) and the solvent (the refractive index and the viscosity). The analysis is done over a liquid sample and at room temperature. Therefore, the material of the present invention needs to be dissolved on distilled water prior to the measurement. The minimun and maximum concentration of the nanoparticles on this solution is related to their expected sizes, according to Malvern experts' advices (Zetasizer Nano User Manual, Malvern Instruments, MAN0485 Issue 1.1 April 2013, Chapter 5, pp. 5-1/5-12).The samples are dissolved in distilled water just before performing the experiment to avoid any interference on results due to sedimentation of nanoparticles. Then, the specific cells of the equipment are filled with a little amount of the sample (around 1 mL) and placed inside the device. The data are adquired three times under the SOP defined earlier to evaluate the results accuracy. Several parameters such as Z-average (Z-ave), Polidispersity Index (PI), and the count rate are obtained. They are useful to compare and evaluate the nanoparticle results accuracy. The Z-ave is defined as the intensity - weighted mean diameter derived from the cumulants analysis of sizes. In DLS this is the most important and stable number produced by the technique. If the Z-ave is decreasing with successive measurements the sample may be unstable. The PI is a dimensionless measure of the broadness of the size distribution calculated from the cumulants analysis. Its value ranges from 0 to 1 being commonly in the range between 0.08 and 0.70. Values lower than 0.08 mean nearly monodisperse sample and greater than 0.70 indicate a very broad distribution of particle sizes. The count rate is the number of photons detected and is usually stated in a "per second" basis. This is useful for determining the sample quality, by monitoring its stability as a function of time. If the count rate decreases with successive measurements could be due to particle sedimentation, creaming or dissolution.

In addition, the DLS technique is used to determine the pH of stability for each nanoparticle. With this aim, the Z Potential (ZP) is measured on aqueous nanoparticle suspensions of different pH at the ZetaSizer nano ZS.

The pH of a solution is a measure of the molar concentration of hydrogen ions in the solution and as such is a measure of the acidity or basicity of the solution. The letters pH stand for "power of hydrogen" and the numerical value is defined as the negative base 10 logarithm of the molar concentration of hydrogen ions. The ZP is a parameter which is related to the surface charge, a property that all materials possess, or acquire, when suspended in a fluid. A stable dispersion has a ZP lower than -35 mV and higher than 35 mV. The Iso Electric Point (IEP) is the pH corresponding to a ZP value of zero.

First, the nanoparticles are dispersed on water at pH of 2, 3, 4, 5, 6, 7, 8, 9 and 10 respectively. Then, the special cuvettes for the determination of ZP are carefully filled with these solutions avoiding the presence of air bubbles. The measurement are done under a predefined SOP considering properties of the nanoparticles (the refractive index and the absorption) and the solvent (the refractive index and the viscosity).

The measurement of pH of solutions is done by a pH electrode (Mettler Toledo Delta 320 pH meter). The pH electrode uses a specially formulated, pH sensitive glass in contact with the solution, which develops a potential (voltage) proportional to the pH of the solution. The reference electrode is designed to maintain a constant potential at any given temperature, and serves to complete the pH measuring circuit within the solution. It provides a known reference potential for the pH electrode. The difference in the potentials of the pH and reference electrodes provides a millivolt signal proportional to pH.
Initially, is necessary to calibrate the electrode by measuring commercial buffer solutions of pH 4 and 7. After this step, the electrode is ready to be used. Distilled water is employed as base solvent. Its pH is around 5. To prepare a solution with a lower pH (acid), a certain quantity of dilute nitric acid (1:3) is added drop by drop until the desired pH is reached. The same procedure is folllowed to prepare the solutions with higher pH (basic) but adding a water solution of sodum hydroxide (50% wt.). All the procedures are carried out at room temperature.

The SEM images are adquired by a field emission scanning electron microscope (FESEM, JEOL, 7001 F). Specimens are first metallized in a thermal evaporator. Secondary Electrons (SE) and Quadrant Back-Scattering Detector (QBSD) images and digital image processing are used to characterize the nanoparticle clusters in the solid salt. A qualitative information about the nanoparticle size and their homogeneous distribution over the salt crystals can be drawn from them.

### 1. Nanofluid

### 1.1. Composition

The quantitative composition of nanofluids of the invention (nanofluids 1, 2 and 3) and the comparative nanofluids (comparative nanofluids 1 and 2) prepared by a method that comprises the use of an ultrasound equipment falling outside of the scope of the present invention as well as the concentration, particle size, and particle size distribution of the nanoparticles in the nanofluid are disclosed in Tables 1 and 2 below:

**Table 1**

| | **Nanofluid 1** | **Nanofluid 2** | **Nanofluid 3** |
|---|---|---|---|
| **Nanoparticle** | Aqueous solution of Al₂O₃ nanoparticles^{(a)} | Aqueous solution of Al₂O₃ nanoparticles^{(a)} | Aqueous solution of SiO₂ nanoparticles^{(c)} |
| S**a**lt | Solar Salt^{(b)} | Solar Salt^{(b)} | Solar Salt^{(b)} |
| **Concentration of nanoparticles** | 1% by weight | 1% by weight | 1% by weight |
| **Particle size nanoparticles** | 24-164nm | 44 - 122 nm | 37 - 200 nm |
| **Particle size Distribution nanoparticles (D90)** | 74.5 nm | 88.5 nm | 97.9 nm |

| | | | |
|---|---|---|---|
| ^{(a)} the Al₂O₃ nanoparticles correponds to an aqueous dispersion of alumina nanoparticles at 10% by weight commercially available as Alumisol 10A. ^{(b)} Solar Salt corresponds to the mixture of 60% by weight of sodium nitrate and 40% by weight of potassium nitrate. ^{(c)} the SiO₂ nanoparticles corresponds to an aqueous dispersion of silica nanoparticles at 30% by weight commercially available as Ludox SM-30. | | | |

**Table 2**

| | **Comparative Nanofluid 1** | **Comparative Nanofluid 2** |
|---|---|---|
| **Nanoparticle** | SiO₂ nanoparticles nanopowder^{(d)} | SiO₂ nanoparticles nanopowder ^{(d)} |
| **Salt** | Solar Salt^{(b)} | Solar Salt^{(b)} |
| **Concentration of nanoparticles** | 1% by weight | 1% by weight |
| **Particle size nanoparticles** | 400 - 1700 nm | 91 - 2300 nm |
| **Particle size Distribution nanoparticles (D90)** | 1020 nm | 455 nm |

| | | |
|---|---|---|
| ^{(b)} Solar Salt corresponds to the mixture of 60% by weight of sodium nitrate and 40% by weight of potassium nitrate. ^{(d)} the SiO₂ nanoparticles corresponds to silica crystalline nanopowder commercially available by Sigma Aldrich with a primary size of 12 nm. | | |

### 1.2. Preparation Process

### 1.2.1. Nanofluid of the invention: Nanofluid 1

a) Preparation of the aqueous dispersion of nanoparticles: The aqueous dispersion of the Al₂O₃ nanoparticles at 10% by weight is commercially available as Alumisol 10A.
b) Preparation of the aqueous solution of the inorganic salt solar salt): 59.4 g of sodium nitrate and 39.6 g of potassium nitrate were weighed and mixed in solid state. Then, the mixture of nitrates was added to 29.7 g of water with a pH of 2 under stirring and until completely dissolution of the salts.
c) Mixing step: 10 g of the aqueous dispersion of nanoparticles of step a) was dropply added to the aqueous solution of the inorganic salt (solar salt) obtained in step b) in a hot plate under mild stirring (130 rpm) and at 30 °C (measured in the bulk).
d) Drying step: The aqueous dispersion obtained in step c) was poured in a glass container and dried in an oven at 100 °C and at a ratio S/V 150 m⁻¹ overnight. Once the nanofluid was solid, then it was scrapped off from the container.
e) Melting Step: The nanofluid obtained in step d) was melted at 396 °C for 30 minutes to obtain 100 g of nanofluid 1.

### 1.2.2. Nanofluid of the invention: Nanofluid 2

Nanofluid 2 was prepared following the process as defined in section 1.2.1. where in step d) the ratio S/V is 900 m⁻¹.

### 1.2.3. Nanofluid of the invention: Nanofluid 3

a) Preparation of the aqueous dispersion of nanoparticles: The aqueous dispersion of the SiO₂ nanoparticles at 30% by weight is commercially available as Ludox SM-30.
b) Preparation of the aqueous solution of the inorganic salt solar salt): 59.4 g of sodium nitrate and 39.6 g of potassium nitrate were weighed and mixed in solid state. Then, the mixture of nitrates was added to 29.7 g of water with a pH of 9 under stirring and until completely dissolution of the salts.
c) Mixing step: 10 g of the aqueous dispersion of nanoparticles of step a) was dropply added to the aqueous solution of the inorganic salt (solar salt) obtained in step b) in a hot plate under mild stirring (130 rpm) and at 30 °C (measured in the bulk).
d) Drying step: The aqueous dispersion obtained in step c) was poured in a glass container and dried in an oven at 100 °C and at a ratio S/V 900 m⁻¹ overnight. Once the nanofluid was solid, then it was scrapped off from the container.
e) Melting Step: The nanofluid obtained in setp d) was melted at 396 °C for 30 minutes to obtain 100 g of nanofluid 3.

### 1.2.4. Comparative Nanofluid: Comparative Nanofluid 1

a) Preparation of the aqueous solution of the inorganic salt solar salt): 59.4 g of sodium nitrate and 39.6 g of potassium nitrate were weighed and mixed in solid state. Then, 1000 g of water was added to the mixture of nitrates under stirring and until completely dissolution of the salts.
b) Mixing step: 1 g of solid silica nanoparticles was precisely weighed and added to the salt solution obtained in step a) in a hot plate under mild stirring (130 rpm) and at 30 °C (measured in the bulk). Then, the nanoparticles are dispersed by applying ultrasonic waves by means of an ultrasonic probe for 5 minutes with a power of 70%.
c) During step: The dispersion obtained in step b) was poured in a glass container and dried in a hot plate at 100 °C and at a ratio S/V 3.5 m⁻¹ overnight. Once the nanofluid was solid, then it was scrapped off from the container.

### 1.2.5. Comparative Nanofluid: Comparative Nanofluid 2

Comparative nanofluid 2 was prepared following the process as defined in section 1.2.4. where in step c) the ratio S/V is 150 m⁻¹.

### Citation List

1. Junior, J.A.A. et al. "The Behavior of Zeta Potential of Silica Suspensions". New Journal of Glass and Ceramics 4, 2014, pp. 29-37.
2. P. W. Atkins, Physical Chemistry, 4th Ed., Oxford University Press, Oxford, 1994, pp. 222-225
3. Vignarooban, K. et al. "Heat transfer fluids for concentrating solar power systems-a review". Applied Energy, 2015, vol. 146, pp. 383-396.
4. Bauer, T. et al. "Material aspects of solar salt for sensible heat storage". 2013. Applied energy, vol.111, pp.1114-1119.
5. Lide, D. R. "Aqueous solubility of inorganic compounds at various temperatures". CRC Handbook of Chemistry and Physics. 2004*).*
6. Zetasizer Nano User Manual, Malvern Instruments, MAN0485 Issue 1.1 April 2013, Chapter 5, pp. 5-1/5-12
7. Zetasizer Nano User Manual, Malvern Instruments, MAN0485 Issue 1.1 April 2013, Chapter 13, pp.13-1/13-12
8. Hammond, C. R. "Physical constants of inorganic compounds". Handbook of Chemistry and Physics, 84th ed., CRC Press, 2004, pp. 39-166
9. Lide, D. R. "Aqueous solubility of inorganic compounds at various temperatures". CRC Handbook of Chemistry and Physics. 84th Edition. 2004. Section 8: Analytical Chemistry. pp. 8-110/8-118

## Claims

1. A process for the preparation of a molten salt-based nanofluid, which comprises:
a) providing an aqueous dispersion of one or more nanoparticles, wherein the dispersion has a pH at which the nanoparticle is stable;
b) providing an aqueous solution of an inorganic salt, wherein the solution has a pH at which the nanoparticle is stable;
c) adding the dispersion obtained in step a) to the solution obtained in step b);
d) drying the resulting mixture obtained in step c) at a temperature below the boiling temperature of the water measured at atmospheric pressure of the mixture obtained in step c) and at a surface/volume ratio comprised from 130 m⁻¹ to 1500 m⁻¹; and
e) melting the mixture obtained in step d); wherein the nanoparticles are selected from the group consisting of metal oxide nanoparticles and semiconductor nanoparticles

2. The process according to claim 1, wherein the nanoparticles of the molten salt-based nanofluid have a particle size comprised from 20 nm to 220 nm and a particle size distribution wherein D90 is comprised from 70 nm to 120 nm.

3. The process according to claim 2, wherein the aqueous dispersion obtained in step a) has a concentration of nanoparticles comprised from 5% to 50% by weight of the weight of the dispersion.

4. The process according to any of the claims 1-3, wherein the nanoparticles are metal oxide nanoparticles selected from the group consisting of Fe₃O₄ nanoparticles, Al₂O₃ nanoparticles, SiO₂ nanoparticles, ZrO₂ nanoparticles, CuO nanoparticles and TiO₂ nanoparticles or alternatively the nanoparticles are semiconductor nanoparticles selected from the group consisting of V₂O₅ nanoparticles, WO₃ nanoparticles, Fe₂O₃ nanoparticles, SnO₂ nanoparticles, CdSe nanoparticles, GaAs nanoparticles, GaP nanoparticles, CdS nanoparticles and ZnS nanoparticles

5. The process according to any of the claims 1-4, wherein the inorganic salt is selected from the group consiting of alkali or alkaline-earth metal carbonate, alkali or alkaline-earth metal sulfate, alkali or alkaline-earth metal phosphate, alkali or alkaline-earth metal chloride, and alkali or alkaline-earth metal nitrate, and mixture thereof.

6. The process according to claim 5, wherein the salt is a mixture of sodium nitrate and potassium nitrate.

7. The process according to any of the claims 1-6, wherein the aqueous solution of the inorganic salt obtained in step b) is selected from the group consisting of a nearly saturated solution and a saturated solution of the inorganic salt.

8. The process according to any of the claims 1-7, wherein step c) is carried out at a mixing speed comprised from 60 rpm to 800 rpm, and at a temperature comprised from 25 °C to 70 °C.

9. The process according to any of the claims 1-8, wherien step d) is carried out at a temperature below the boiling temperature of the water measured at atmospheric pressure of the mixture obtained in step c) and at a surface/volume ratio comprised from 208 m⁻¹ to 1232 m⁻¹.

10. The process according to any of the claims 1-9, wherein step e) is carried out at a temperature comprised from 50 °C to 100 °C above the melting temperature of the inorganic salt for an appropriate period of time.

11. The process according to any of the claims 1-10, which comprises firstly, providing the aqueous suspension of step a) and secondly, preparing the solution of step b) carrying out the following steps:
b') weighing the amount of inorganic salt which are composing the molten salt-based nanofluid;
b") adding the appropriate amount of water having the pH at which the nanoparticle is stable until having a saturated solution; and
b"') mixing until dissolve completely the inorganic salt;
and subsequently carrying out step c).

12. A molten salt-based nanofluid comprising nanoparticles of a particle size comprised from 20 nm to 200 nm and a particle size distribution wherein D90 is comprised from 70 to 120 nm.

13. The molten salt-based nanofluid according to claim 12, obtainable by the process as defined in any of the claims 1-11.

14. Use of a molten salt-based nanofluid as defined in any of the claims 12-13, as a HTF or thermal storage material.

15. A system for heat transfer or thermal storage which comprises the molten salt-based nanofluid as defined in any of the claims 12-13.
